# EUROPÄISCHE PATENTSCHRIFT

(11) **EP 2 860 049 B1**
(45) Veröffentlichungstag und Bekanntmachung des Hinweises auf die Patenterteilung: **16.11.2016**
(21) Anmeldenummer: 14179210.1
(22) Anmeldetag: 31.07.2014
(51) Int. Cl.: B60C 11/12

(54) **Fahrzeugluftreifen**
Pneumatic tyres for a vehicle
Pneus de véhicule

(30) Priorität: 27.09.2013 DE 102013110754
(43) Veröffentlichungstag der Anmeldung: 15.04.2015
(73) Patentinhaber: Continental Reifen Deutschland GmbH, 30165 Hannover (DE)
(72) Erfinder: Behr, Ulrich, 30169 Hannover (DE)
(74) Vertreter: Finger, Karsten

(56) Entgegenhaltungen:
- EP-A1- 0 590 375
- EP-A1- 2 335 947
- JP-A- H08 318 711

## Beschreibung

Die Erfindung betrifft ein Laufstreifenprofil eines Fahrzeugluftreifens mit wenigstens einer Profilblockreihe, welche aus in Umfangsrichtung U des Reifens hintereinander angeordneten und durch schräg oder quer verlaufende Rillen voneinander beabstandeten Profilblockelementen ausgebildet und in axialer Richtung A durch Umfangsrillen begrenzt ist, wobei die Profilblockelemente in radialer Richtung R des Reifens nach außen hin durch eine die Bodenkontaktfläche bildende radial äußere Oberfläche und in axialer Richtung A zur jeweils angrenzenden Umfangsrillen durch eine eine Rillenwand der Umfangsrillen bildende Profilblockelementflanke begrenzt sind, wobei in der radial äußeren Oberfläche von Profilblockelementen der Profilblockreihe jeweils eine Gruppe von mehreren in Umfangsrichtung U hintereinander angeordneten parallelen Feineinschnitte ausgebildet sind, die sich ausgehend von der einen Umfangsrille über eine in der radial äußeren Oberfläche gemessene Länge L und mit einer Tiefe t₁ erstrecken und dort im Abstand zur anderen Umfangsrillen enden.

Derartige Fahrzeugluftreifen sind bekannt.

Fahrzeugluftreifen mit in axialer Richtung durch Umfangsrillen begrenzten Profilblockreihen, welche aus in Umfangsrichtung hintereinander angeordneten und durch Querrillen voneinander getrennten Profilblockelementen ausgebildet sind, sind bekannt. Die Ausbildung derartiger Profilblockreihen mit die Profilblockelemente in Umfangsrichtung trennenden Querrillen ermöglicht beim Abrollen des Reifens mit Hilfe der Querrillen eine vereinfachte Abplattung der Profilblockreihen beim Durchlauf des Reifenlatsches. Hierdurch kann beispielsweise der Rollwiderstand positiv beeinflusst werden. Zusätzlich ermöglichen die Querrillen die Aufnahme und die Ableitung von Wasser in die Umfangsrillen und durch die durch die Querrillen gebildeten Profilblockkanten einen verbesserten Griff auf nasser Oberfläche, wodurch Aquaplaningeigenschaften und Nassbremseigenschaften positiv beeinflusst werden können. Die Profilblockreihen mit ihren Querrillen sind somit wünschenswert zur Ausbildung von Fahrzeugluftreifen mit günstigen Rollwiderstandseigenschaften bei guten Nassbrems- und Aquaplaningeigenschaften.
Allerdings bewirken die durch die Querrillen gebildeten Profilblockkanten beim Einlaufen in den Reifenlatsch ein Aufschlagen des Profilblockelementes mit der Folge einer unangenehmen Geräuschentstehung. Zur Reduzierung der Geräuschentstehung ist es daher wünschenswert, das Profil möglichst frei von Querrillen auszubilden, was sich jedoch nachteilig auf das Abplattverhalten des Laufstreifenprofils im Reifenlatsch und somit auf den Rollwiderstand auswirkt und die Nassgriffeigenschaften sowie die Aquaplaningeigenschaften negativ beeinflusst.
Darüber hinaus ist bekannt, in Profilblockelementen zusätzliche Feineinschnitte zur Ausbildung zusätzlicher Nassgriffeigenschaften zur Erzielung eines weiter verbesserten Nassgriffs sowie Schneegriffs auszubilden.
Der Erfindung liegt die Aufgabe zugrunde, bei einem derartigen Laufstreifenprofil mit einfachen Mitteln unter Nutzung der Vorteile von Profilblockreihen mit Querrillen und Feineinschnitten ein verbessertes Geräuschverhalten zu ermöglichen.

Gattungsbildende Laufstreifenprofile sind beispielsweise aus der EP0590375A1 und EP2335947A1 bekannt.

Die Aufgabe wird erfindungsgemäß durch die Ausbildung eines Laufstreifenprofil eines Fahrzeugluftreifens mit wenigstens einer Profilblockreihe, welche aus in Umfangsrichtung U des Reifens hintereinander angeordneten und durch schräg oder quer verlaufende Rillen voneinander beabstandeten Profilblockelementen ausgebildet und in axialer Richtung A durch Umfangsrillen begrenzt ist, wobei die Profilblockelemente in radialer Richtung R des Reifens nach außen hin durch eine die Bodenkontaktfläche bildende radial äußere Oberfläche und in axialer Richtung A zur jeweils angrenzenden Umfangsrille durch eine eine Rillenwand der Umfangsrillen bildende Profilblockelementflanke begrenzt sind, wobei in der radial äußeren Oberfläche von Profilblockelementen der Profilblockreihe jeweils eine Gruppe von mehreren in Umfangsrichtung U hintereinander angeordneten parallelen Feineinschnitte ausgebildet sind, die sich ausgehend von der einen Umfangsrillen über eine in der radial äußeren Oberfläche gemessene Länge L und mit einer Tiefe t₁ erstrecken und dort im Abstand zur anderen Umfangsrillen enden, gemäß den Merkmalen von Anspruch 1 gelöst, bei dem diese von im Profilblockelement in Umfangsrichtung jeweils hintereinander angeordneten Feineinschnitte der Länge L mit L≥6mm in der radial äußeren Oberfläche aus einem ersten und aus einem zweiten Erstreckungsabschnitt bestehen, wobei sie in dem an die Rillenwand der Umfangsrille anschließenden ersten Erstreckungsabschnitt der Länge b mit b≤2mm längs der Rillenwand jeweils bis in eine Tiefe t₂ erstreckt und in dem in der radial äußeren Oberfläche an den ersten Erstreckungsabschnitt anschließenden zweiten Erstreckungsabschnitt mit einer Tiefe t₁ mit (4 t₁) ≤ t₂ ausgebildet ist, und bei dem diese in eine Drehrichtung D des Reifens in einem Profilblockelement jeweils hintereinander angeordneten Feineinschnitte der Gruppe von einem Feineinschnitt in dieser Drehrichtung D jeweils zum nächsten Feineinschnitt hin sowohl mit einer zunehmenden Tiefe t₁ als auch mit einer zunehmenden Tiefe t₂ ausgebildet sind.

Durch diese Ausbildung wird ermöglicht, dass in Drehrichtung D gesehen ausgehend von der in den Reifenlatsch einlaufenden Kante des Profilblockelementes hintereinander bis zur auslaufenden Kante eine fein abgestufte Aufweichung des zwischen radial äußerer Oberfläche und Umfangsrillen begrenzten Profilblockabschnittes mit hohem Dämpfungsverhalten umgesetzt werden kann, wodurch eine deutliche Reduzierung der Geräuschentstehung beim Einlaufen begünstigt wird. Somit ist eine deutliche Reduzierung der Geräuschentstehung bei Nutzung der Vorteile der Profilblockreihenausbildung mit ihren Querrillen sowie mit den zusätzlichen durch die Feineinschnitte bewirkten Griffkanten möglich. Die Ausbildung mit den zwei Erstreckungsabschnitten ermöglicht darüber hinaus die Aufrechterhaltung einer ausreichenden für gute Handlingeigenschaften erforderlichen hohen Steifigkeit der Profilblockelemente. Durch die Abstufung von Feineinschnitt zu Feineinschnitt kann dabei eine sprunghafte zu große Aufweichung vermieden werden, welche sich negativ auf die Trockenbremseigenschaften auswirken könnte.

Besonders vorteilhaft ist die Ausbildung eines Laufstreifenprofils gemäß den Merkmalen von Anspruch 2, wobei diese Feineinschnitte des Profilblockelementes mit einer von einem Feineinschnitt des Profilblockelements zum in dieser Drehrichtung D nächsten Feineinschnitt des Profilblockelements hin jeweils zunehmender Länge L ausgebildet sind. Hierdurch kann in einfacher Weise ein stetiges Aufweichen des Profilblockelementes und in Drehrichtung D eine kontinuierliche Abnahme der Steifigkeit des Profilblockelementes zur nachfolgenden Querrille hin umgesetzt werden. Hierdurch kann erreicht werden, das Profilblockelement beim Abrollen insgesamt weich in den Reifenlatsch einläuft.

Besonders vorteilhaft ist die Ausbildung eines Laufstreifenprofils gemäß den Merkmalen von Anspruch 3, wobei die Profilblockelemente in der radial äußeren Oberfläche mit einer in axialer Richtung A gemessenen Breite B ausgebildet sind, und wobei die Länge L von allen dieser im Profilblockelement in Drehrichtung D hintereinander ausgebildeten Feineinschnitte jeweils mit L< B ausgebildet ist. Hierdurch kann in einfacher Weise eine ausreichende Grundsteifigkeit des Profilblockelementes zur Sicherstellung guter Bremseigenschaften auf trockener Straße trotz minimierter Geräuschentstehung aufrechterhalten werden.

Besonders vorteilhaft ist die Ausbildung eines Laufstreifenprofils gemäß den Merkmalen von Anspruch 4, wobei diese in einem Profilblockelement in Drehrichtung D hintereinander angeordneten Feineinschnitte in der radial äußeren Oberfläche jeweils mit gleichem Abstand a mit 1mm ≤ a ≤3mm zu dem im Profilblockelement in Umfangsrichtung U benachbarten Feineinschnitt angeordnet sind. Mit dieser Ausbildung kann in einfacher Weise die Lösung des Zielkonflikt aus "guten Trockenbremseigenschaften" einerseits und "Geräuschreduktion" andererseits bei den üblichen Dimensionierungen der Profilblockelemente weiter optimiert umgesetzt werden.

Besonders vorteilhaft ist die Ausbildung eines Laufstreifenprofils gemäß den Merkmalen von Anspruch 5, wobei die Feineinschnitte des Profilblockelements in der radial äußeren Oberfläche parallel zu den beiden das Profilblockelement in Umfangsrichtung begrenzenden Rillen ausgerichtet sind, wobei der in der radial äußeren Oberfläche gemessene Abstand c zwischen der dem Profilblockelement in Drehrichtung D vorgeordneten Rille einerseits und dem dieser Rille nächstgelegenen Feineinschnitt des Profilblockelements andererseits und der in der radial äußeren Oberfläche gemessene Abstand d zwischen der dem Profilblockelement in Drehrichtung D nachgeordneten Rille einerseits und dem dieser Rille nächstgelegenen Feineinschnitt des Profilblockelements andererseits mit d> c - insbesondere mit d≥(2c) - ausgebildet sind. Hierdurch kann in einfacher Weise sichergestellt werden, dass die für die Geräuschentstehung besonders maßgebliche, in Drehrichtung D vordere und somit einlaufende Kante des Profilblockelementes zur Geräuschreduktion aufgeweicht wird und dennoch ausreichende Blocksteifigkeit de Profilblockelementes zur Erzielung guter Trockenbremseigenschaften aufrechterhalten wird.

Besonders vorteilhaft ist die Ausbildung eines Laufstreifenprofils gemäß den Merkmalen von Anspruch 6, wobei der Abstand c mit 1mm ≤ c ≤ 3mm ausgebildet ist. Mit dieser Ausbildung kann in einfacher Weise die Lösung des Zielkonflikt aus "guten Trockenbremseigenschaften" einerseits und "Geräuschreduktion" andererseits bei den üblichen Dimensionierungen der Profilblockelemente weiter optimiert umgesetzt werden.

Besonders vorteilhaft ist die Ausbildung eines Laufstreifenprofils gemäß den Merkmalen von Anspruch 7, wobei diese in einem Profilblockelement ausgebildete Gruppe von in Drehrichtung D hintereinander angeordneten Feineinschnitten aus Z Feineinschnitte mit 3 ≤Z≤ 6 besteht. Die Zahl der Feineinschnitte ist groß genug, damit in einfachere Wiese sichergestellt werden, dass für eine wirkungsvolle Aufweichung eine ausreichende Anzahl an Feineinschnitten im Profilblockelement umgesetzt werden kann, und klein genug um üblichen Dimensionierungen von Profilblockelementen eine optimale Geräuschreduktion bei ausreichernder Steifigkeit für Trockenbremseigenschaften umsetzen zu können.

Die Erfindung wird im Folgenden an Hand der in den Figuren 1 bis 9 dargestellten Ausführungsbeispiele näher erläutert. Hierin zeigen
- Fig.1: eine Draufsicht auf einen Umfangsabschnitt einer Profilblockreihe eines PKW-Reifens mit erfindungsgemäßer Ausbildung,
- Fig.2: die Profilblockreihe von Fig.1 in Schnittdarstellung gemäß Schnitt II-II von Fig.1,
- Fig.3: die Profilblockreihe von Fig.1 in Schnittdarstellung gemäß Schnitt III-III von Fig.1,
- Fig.4: die Profilblockreihe von Fig.1 in Schnittdarstellung gemäß Schnitt IV-IV von Fig.1,
- Fig.5: die Profilblockreihe von Fig.1 in Schnittdarstellung gemäß Schnitt V-V von Fig.1,
- Fig.6: die Profilblockreihe von Fig.1 in Schnittdarstellung gemäß Schnitt VI-VI von Fig.1,
- Fig.7: die Profilblockreihe von Fig.1 in Schnittdarstellung gemäß Schnitt VII-VII von Fig.1,
- Fig.8: die Profilblockreihe von Fig.1 in Schnittdarstellung gemäß Schnitt VIII-VIII von Fig.1 und
- Fig.9: die Profilblockreihe von Fig.1 in Schnittdarstellung gemäß Schnitt IX-IX von Fig.1.

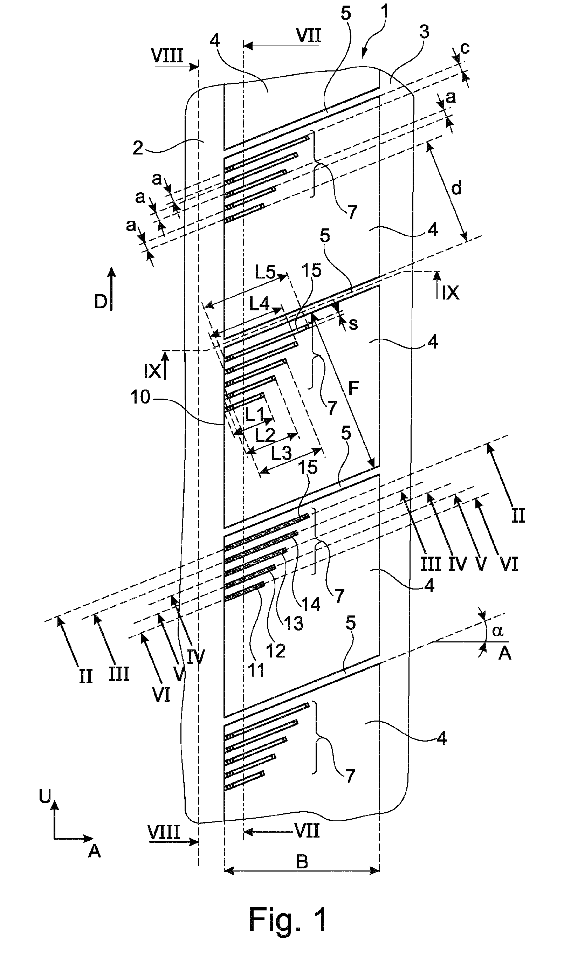

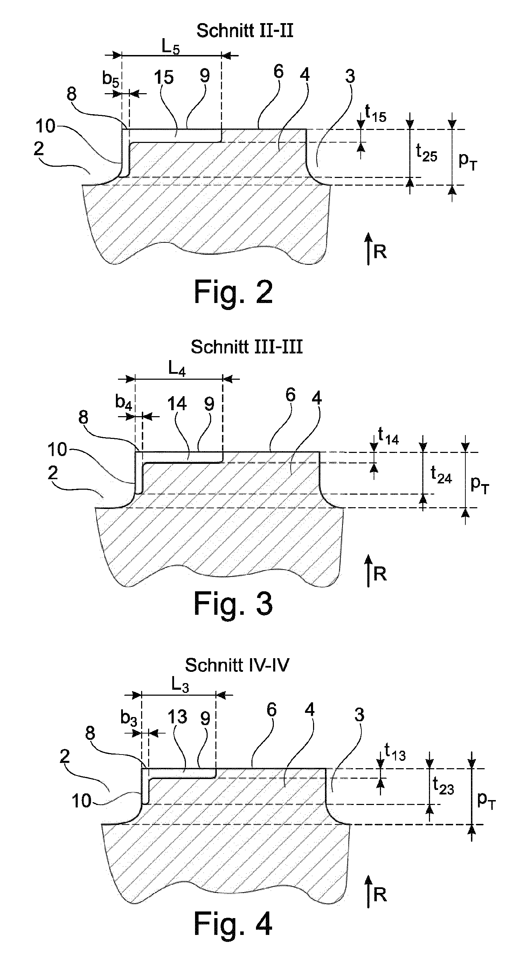

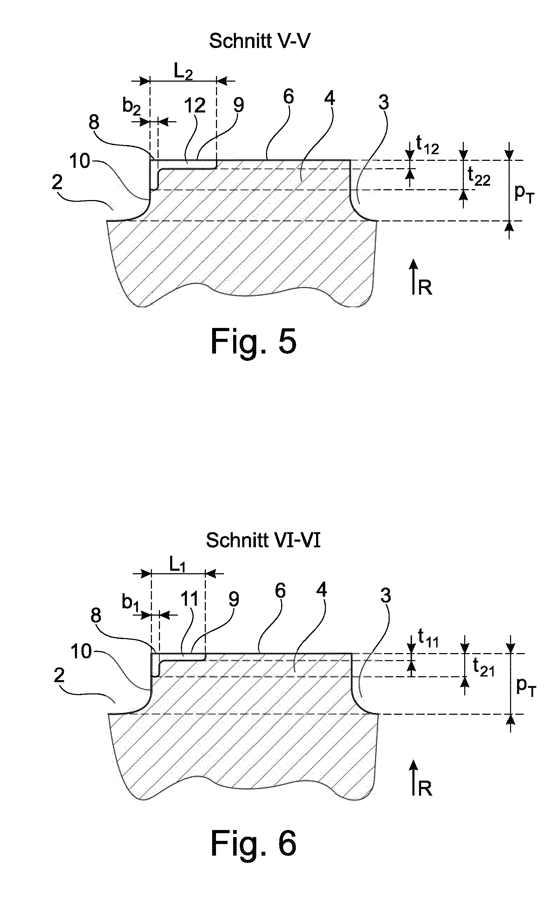

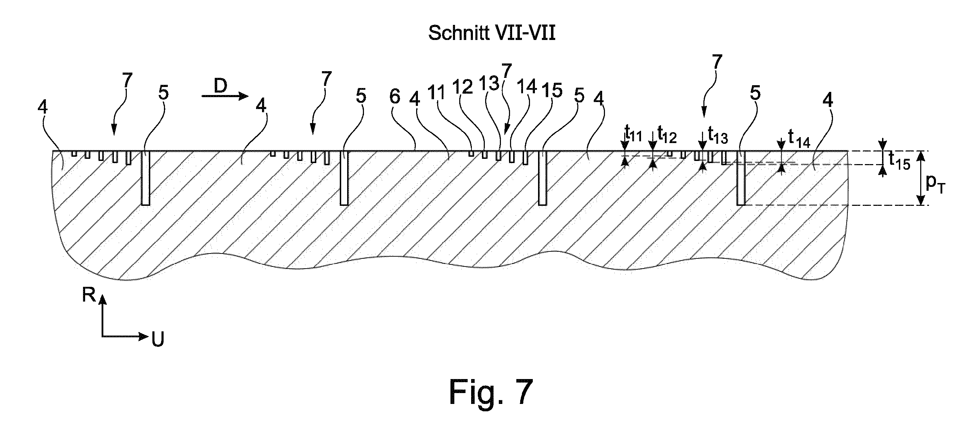

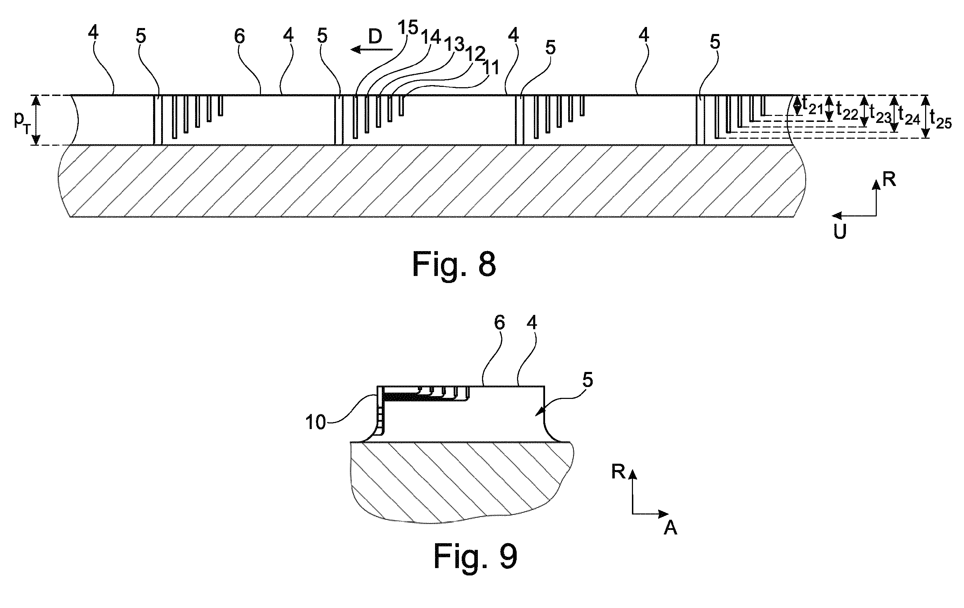

Die Figuren 1 bis 9 zeigen jeweils einen Schnitt eines Laufstreifenprofils eines Fahrzeugluftreifens für Personenkraftwagen (PKW) mit einer über den Umfang eines Fahrzeugluftreifens erstreckten und in Umfangsrichtung U des Fahrzeugluftreifens ausgerichteten Profilblockreihe 1 bekannter Art. Die Profilblockreihe 1 ist in axialer Richtung A des Fahrzeugluftreifens zur einen Seite hin durch eine über den gesamten Umfang des Fahrzeugluftreifen erstreckten und in Umfangsrichtung U ausgerichteten Umfangsrille 2 und in axialer Richtung zu A zur anderen Seite hin durch eine über den gesamten Umfang des Fahrzeugluftreifens erstreckten und in Umfangsrichtung U ausgerichteten Umfangsrille 3 begrenzt. Die Profilblockreihe 1 ist in bekannter Weise aus über den Umfang des Fahrzeugluftreifens in Umfangsrichtung U hintereinander angeordneten und in Umfangsrichtung U jeweils durch Querrillen 5 voneinander beabstandeten, radial erhabenen Profilblockelementen 4 bekannter Art ausgebildet. Im dargestellten Ausführungsbeispiel sind die Querrillen 5 jeweils parallel zueinander ausgerichtet und geradling erstreckt verlaufend ausgebildet. Die Querrillen 5 erstrecken sich in axialer Richtung A ausgehend von der Umfangsrille 2 bis zur Umfangsrille 3.

Die Querrillen 5 sind im dargestellten Ausführungsbeispiel unter Einschluss eines Neigungswinkels α zur axialen Richtung A mit 0°≤ α ≤30° verlaufend ausgebildet. Im dargestellten Ausführungsbeispiel ist α =10° gewählt.

Die Profilblockelemente 4 sind in radialer Richtung R des Reifens nach außen hin in bekannter Weise durch eine die Straßenkontaktoberfläche bildende radial äußere Oberfläche 6 begrenzt. Die Querrillen 5 sind in bekannter Weise in radialer Richtung R nach innen hin längs ihrer gesamten Erstreckung von der Umfangsrille 2 bis zur Umfangsrille 3 hin durch einen Rillengrund begrenzt. Beiderseits ihres Rillengrundes sind die Querrillen 5 jeweils durch eine Rillenwand begrenzt, welche jeweils die zur jeweiligen Querrille 5 hinweisende Profilblockelementflanke des durch die Querrille begrenzten Profilblockelementes 4 bildet und sich in radialer Richtung R vom Rillengrund bis zur radial äußeren Oberfläche 6 des Profilblockelementes 4 erstreckt.

Die Umfangsrillen 2 und 3 sind in radialer Richtung R nach innen hin in bekannter Weise durch einen über den gesamten Umfang des Fahrzeugluftreifens erstreckten Rillengrund begrenzt. Die Umfangsrillen 2 und 3 sind jeweils beiderseits ihres Rillengrundes durch eine in radialer Richtung R ausgehend vom Rillengrund bis zur radial äußeren Oberfläche erstreckte Rillenwand begrenzt. Die Umfangsrille 2 ist dabei mit ihrer zur Profilblockreihe 1 hin weisenden Rillenwand 10 begrenzt, welche die zur Umfangsrille 2 hinweisenden Profilblockelementflanken der Profilblockelemente 4 der Profilblockreihe 1 bildet, und erstreckt sich ausgehend vom Rillengrund der Umfangsrille 2 bis zur radial äußeren Oberfläche 6 der Profilblockelemente 4. In analoger Weise bildet die zur Profilblockreihe 1 hinweisende Rillenwand der Umfangsrille 3 jeweils die zur Umfangsrille 3 hinweisende Profilblockelementflanke der Profilblockelemente 4 der Umfangsrille 1 und erstreckt sich ausgehend vom Rillengrund der Umfangsrille 3 in radialer Richtung R nach außen bis zur radial äußeren Oberfläche 6 der Profilblockelemente 4.

Die Umfangsrillen 2 und 3 sowie die Querrillen 5 sind mit einer in radialer Richtung R ausgehend von der radial äußeren Oberfläche 6 der angrenzenden Profilblockelemente 4 nach innen hin bis zu ihrem Rillengrund gemessenen Profiltiefe P_{T} mit 7mm≤P_{T}≤9mm ausgebildet. Im dargestellten Ausführungsbeispiel eines PKW-Reifens ist P_{T} beispielsweise mit P_{T=} 8mm ausgebildet.

Die Umfangsrillen 2 und 3 sind mit einer in der radialen Position der radial äußeren Oberfläche 6 in axialer Richtung A gemessenen Breite im Bereich von 5mm bis 10 mm ausgebildet. Beispielsweise ist die Breite der Umfangsrillen 2 und 3 mit 9 mm ausgebildet.

Die Querrillen 5 sind in radialen Position der radial äußeren Oberfläche 6 der angrenzenden Profilblockelemente 4 mit einer senkrecht zur Erstreckungsrichtung der jeweiligen Querrille 5 gemessenen Breite ausgebildet, welche zwischen 4mm und 8 mm ausgebildet ist. Beispielsweise ist die Breite der Querrillen 5 mit 6 mm ausgebildet.

In jedem Profilblockelement 4 der Profilblockreihe 1 ist in der radial äußeren Oberfläche 6 jeweils eine Gruppe 7 von fünf in Umfangsrichtung U hintereinander angeordneten und in der radial äußeren Oberfläche 6 gradlinig parallel zueinander und parallel zu den Querrillen 5 erstreckt ausgerichtet ausgebildeten Feineinschnitten 11, 12, 13, 14 und 15 ausgebildet. Jeder Feineinschnitt der Gruppe 7 von Feineinschnitten 11, 12, 13, 14 und 15 erstreckt sich in der radial äußeren Oberfläche 6 jeweils ausgehend von der Rillenwand 10 der Umfangsrillen 2 über eine Erstreckungslänge L und ist längs seiner Erstreckung in Erstreckungsrichtung in der radial äußeren Oberfläche 6 jeweils aus einem ersten Erstreckungsabschnitt 8 und einem sich an den ersten Erstreckungsabschnitt 8 unmittelbar anschließenden Erstreckungsabschnitt 9 ausgebildet.

In Fig. 1 ist die Drehrichtung D des Fahrzeugluftreifens bei Vorwärtsfahrt des auf ein Fahrzeug montierten Fahrzeugluftreifens mit einer Pfeildarstellung eingetragen.

Wie in Fig.1 zu erkennen ist, ist die Gruppe 7 von Feineinschnitten 11, 12, 13, 14 und 15 eines Profilblockelementes 4 derart hintereinander angeordnet, dass diese in Drehrichtung D gesehen in der Reihenfolge beginnend mit Feineinschnitt 11, dann Feineinschnitt 12, dann Feineinschnitt 13, dann Feineinschnitt 14 und Abschluss Feineinschnitt 15 hintereinander angeordnet ausgebildet sind. Dies bedeutet, dass beim Abrollen des Reifens auf einer Straßenoberfläche in Drehrichtung D bei Vorwärtsfahrt der Feineinschnitt 15 der Gruppe 7 eines Profilblockelementes 4 zuerst die Straßenoberfläche berührt, im Anschluss daran der Feineinschnitt 14 der Gruppe 7, dann der Feineinschnitt 13 der Gruppe 7, dann der Feineinschnitt 12 der Gruppe 7 und zuletzt der Feineinschnitt 11 der Gruppe 7.

Wie in den Figuren 1 bis 6 dargestellt ist, ist jeweils der Feineinschnitt 11 der Gruppe 7 mit der in der radial äußeren Oberfläche 6 in Erstreckungsrichtung des Feineinschnittes 11 ausgebildeten Erstreckungslänge L₁ ausgebildet, der Feineinschnitt 12 der Gruppe 7 mit der Erstreckungslänge L₂, der Feineinschnitt 13 der Gruppe 7 mit der Erstreckungslänge L₃, der Feineinschnitt 14 der Gruppe 7 mit der Erstreckungslänge L₄ und der Feineinschnitt 15 der Gruppe 7 mit der Erstreckungslänge L₅ mit L₅>L₄>L₃>L₂>L₁. Dabei ist L₅ mit L₅<B ausgebildet.

In ihrem ersten Erstreckungsabschnitt 8, welcher mit der in der radial äußeren Oberfläche 6 des Profilblockelements 4 jeweils ausgehend von der Rillenwand 10 aus gemessenen Erstreckungslänge b (b₁, b₂, b₃, b₄, b₅) ausgebildet ist, erstrecken sich die Feineinschnitte 11, 12, 13, 14 und 15 der Gruppe 7 in radialer Richtung R jeweils ausgehend von der radial äußeren Oberfläche 6 bis in eine in der Rillenwand 10 gemessene maximale Erstreckungstiefe t₂. Der Feineinschnitt 11 ist dabei mit einer Erstreckungslänge b₁ seines ersten Erstreckungsabschnitts 8 und mit einer in der Rillenwand 10 gemessenen maximalen Erstreckungstiefe t₂₁ ausgebildet. Der Feineinschnitt 12 ist mit einer Erstreckungslänge b₂ seines ersten Erstreckungsabschnitts 8 und mit einer in der Rillenwand 10 gemessenen maximalen Erstreckungstiefe t₂₂ ausgebildet. Der Feineinschnitt 13 ist mit einer Erstreckungslänge b₃ seines ersten Erstreckungsabschnittes 8 und mit einer in der Rillenwand 10 gemessenen maximalen Erstreckungstiefe t₂₃ ausgebildet. Der Feineinschnitt 14 ist mit einer Erstreckungslänge b₄ seines ersten Erstreckungsabschnitts 8 und mit einer in der Rillenwand 10 gemessenen maximalen Erstreckungstiefe t₂₄ ausgebildet. Der Feineinschnitt 15 ist mit einer Erstreckungslänge b₅ seines ersten Erstreckungsabschnitts 8 und mit einer in der Rillenwand 10 gemessenen maximalen Erstreckungstiefe t₂₅ ausgebildet. Für die Tiefen t₂ (t₂₁, t₂₂, t₂₃, t₂₄ t₂₅) und die Breiten b (b₁, b₂, b₃, b₄, b₅) gilt dabei, t₂₁ <t_{22<} t₂₃< t₂₄< t₂₅ und b₁ ≤ b₂≤ b₃≤ b₂≤ b₅ ≤ 2mm.

In einem Ausführungsbeispiel ist b₁ < b₂< b₃< b₄< b₅ausgebildet.

In einem anderen Ausführungsbeispiel ist b₁=b₂=b₃=b₄=b₅=1,5mm ausgebildet.

Längs seines zweiten Erstreckungsabschnitts 9 ist der Feineinschnitt 11 mit einer in radialer Richtung R des Reifens gemessenen Tiefe t₁₁ ausgebildet. Der Feineinschnitt 12 ist längs seines zweiten Erstreckungsabschnitts 9 mit einer Tiefe t₁₂ ausgebildet. Der Feineinschnitt 13 ist längs seines zweiten Erstreckungsabschnitts 9 mit einer Tiefe t₁₃ ausgebildet. Der Feineinschnitt 14 ist längs seines zweiten Erstreckungsabschnitts 9 mit einer Tiefe t₁₄ ausgebildet. Der Feineinschnitt 15 ist längs seines zweiten Erstreckungsabschnitts 9 mit einer Tiefe t₁₅ ausgebildet. Für die Tiefen t₁ (t₁₁, t₁₂, t₁₃, t₁₄, t₁₅) gilt t₁₁ <t_{12<} t₁₃< t₁₄< t₁₅ ausgebildet ist. Für die Tiefen t₁ (t₁₁, t₁₂, t₁₃, t₁₄, t₁₅) der zweiten Erstreckungsabschnitte 9 und t₂ (t_{21,} t_{22,} t_{23,} t₂₄, t₂₅) der ersten Erstreckungsabschnitte 8 der Feineinschnitte 11, 12, 13, 14 und 15 gilt jeweils (4 t₁)<t₂<P_{T}. So sind beim Feineinschnitt 11 die Tiefen t₁₁ und t₂₁ mit (4 t₁₁)<t₂₁ ausgebildet. Beim Feineinschnitt 12 sind die Tiefen t₁₂ und t₂₂ mit (4 t₁₂)<t₂₂ ausgebildet. Beim Feineinschnitt 13 sind die Tiefen t₁₃ und t₂₃ mit (4 t₁₃)<t₂₃ ausgebildet. Beim Feineinschnitt 14 sind die Tiefen t₁₄ und t₂₄ mit (4 t₁₄)<t₂₄ ausgebildet. Beim Feineinschnitt 15 sind die Tiefen t₁₅ und t₂₅ mit (4 t₁₅)<t₂₅<P_{T} ausgebildet.

Die Feineinschnitte 11, 12, 13, 14 und 15 erstrecken sich dabei längs ihrer radialen Erstreckung in der Rillenwand 10 von der radial äußeren Oberfläche 6 des Profilblockelementes 4 ausgehend bis in die jeweilige maximale Erstreckungstiefe t₂₁, t₂₂ t₂₃, t₂₄ bzw. t₂₅ in einer Erstreckungsrichtung in einer parallelen Richtung zur Erstreckung des jeweiligen ersten Erstreckungsabschnitts 8 in der radial äußeren Oberfläche 6 ausgehend von der Rillenwand 10 über die jeweilige Erstreckungslänge b₁, b₂, b₃, b₄ bzw. b₅ des ersten Erstreckungsabschnitts 8 in das Profilblockelement 4 hinein.

Die Erstreckungslänge L₁ des kürzesten Feineinschnitts 11 der Gruppe 7 ist jeweils mit 6mm<L₁ ausgebildet. Beispielsweise ist L₁=6mm, L₂ =8mm, L₃ =10 mm, L₄=12 mm und L₅=14 mm. Die Feineinschnitte sind längs ihrer Erstreckung mit einer in der radial äußeren Oberfläche 6 sowie in der Rillenwand 10 gemessenen Breite s ausgebildet mit 0,5mm<s<1mm. Im dargestellten Ausführungsbeispiel sind die Feineinschnitte 11, 12, 13, 14 und 15 der Gruppe 7 des Profilblockelementes 4 jeweils mit gleicher Breite s ausgebildet.

In einer anderen, nicht dargestellter Ausführung ist der Feineinschnitt 12 mit einer größeren Breite s als der Feineinschnitt 11 ausgebildet, der Feineinschnitt 13 mit größerer Breite s als der Feineinschnitt 12, der Feineinschnitt 14 mit größerer Breite s als der Feineinschnitt 13 und der Feineinschnitt 15 mit einer größeren Breite als der Feineinschnitt 14.

Die benachbarten Feineinschnitte 11, 12, 13, 14 und 15 sind - wie in Figur 1 dargestellt ist - jeweils mit einem in der radial äußeren Oberfläche 6 senkrecht zu ihrer Erstreckungsrichtung gemessenen Abstand a zu einander angeordnet mit 1mm<a<3mm. Im dargestellten Ausführungsbeispiel sind die Abstände a zwischen den benachbarten Feineinschnitten 11 und 12, 12 und 13, 13 und 14 sowie 14 und 15 der Gruppe 7 des Profilblockelementes jeweils gleich groß gewählt ausgebildet. Beispielsweise ist a=2mm gewählt. Der in Drehrichtung D bei Vorwärtsfahrt vorgeordnete Feineinschnitt 15 der Gruppe 7 ist in der radial äußeren Oberfläche 6 in einem senkrecht zur Erstreckungsrichtung des Feineinschnitts 15 gemessenen Abstand c zu der das Profilblockelement in Drehrichtung D vorgeordnet angeordneten Querrille 5 angeordnet. Der in Drehrichtung D innerhalb der Gruppe 7 der Feineinschnitte 11 bis 15 letzte Feineinschnitt 11 ist in der radial äußeren Oberfläche 6 in einem senkrecht zur Erstreckungsrichtung des Feineinschnitts 11 gemessenen Abstand d zu der der Gruppe 7 und dem Profilblockelement 4 nachgeordneten Querrille 5 ausgebildet. Die Abstände d und c sind dabei mit d>2c ausgebildet. Der Abstand c ist mit 1mm<c<3mm ausgebildet. Beispielsweise ist der Abstand c mit c=2mm ausgebildet.

Im dargestellten Ausführungsbeispiel ist d>(0,5 F) ausgebildet, wobei F den senkrecht zur Erstreckungsrichtung der beiden das Profilblockelement begrenzenden Querrillen 5 gemessenen Abstand zwischen den beiden Querrillen 5 in der radial äußeren Oberfläche 6 angibt.

Im dargestellten Ausführungsbeispiel ist die Gruppe 7 der im einzelnen Profilblockelement 4 ausgebildeten parallelen Feineinschnitte mit jeweils fünf Feineinschnitten 11 bis 15 ausgebildet. Je nach Erfordernissen an die Auslegung der Profilblockreihen und die Länge der Profilblockelemente können die Gruppen 7 in analoger Weise mit Z derartigen Feineinschnitten mit ersten Erstreckungsabschnitten 8 und mit zweiten Erstreckungsabschnitten 9 ausgebildet sein, wobei eine ganze Zahl mit 3≤Z≤6 ist. Im dargestellten Ausführungsbeispiel ist somit Z=5 gewählt.

In einem nicht dargestellten Ausführungsbeispiel sind in einem Laufstreifenprofil zwei oder mehr in axialer Richtung A nebeneinander angeordneten Profilblockreihen mit entsprechend den Ausführungen und Darstellungen zu den Figuren 1 bis 9 ausgebildeten Gruppen 7 von Feineinschnitten ausgebildet.

In einem Ausführungsbeispiel sind in den Profilblockreihen dabei die Gruppen 7 von Feineinschnitten 11 bis 15 jeweils - wie in Figur 1 dargestellt - in der gleichen Drehrichtung D ausgerichtet. Eine solche Ausbildung ist beispielsweise für den Einsatz in symmetrischen Laufstreifenprofilen besonders geeignet.

Zum Einsatz bei asymmetrischen Laufstreifenprofilen wir beispielsweise ein Laufstreifenprofil mit wenigsten zwei Profilblockreihen ausgebildet. Dabei sind die Gruppen von Feineinschnitten in einer Profilblockreihe - wie in den Figuren 1 bis 9 dargestellt und beschrieben - in ihrer Reihenfolge und Anordnung in der darin ausgebildeten Drehrichtung D bei Vorwärtsfahrt ausgebildet und in der anderen Profilblockreihe in analoger Weise in der Gegendrehrichtung und somit in der Drehrichtung bei Rückwärtsfahrt.

### Bezugszeichenliste

### (Teil der Beschreibung)

- 1: Profilblockreihe
- 2: Umfangsrille
- 3: Umfangsrille
- 4: Profilblockelement
- 5: Querrillen
- 6: Radial äußere Oberfläche
- 7: Gruppe von Feineinschnitten
- 8: Erster Erstreckungsabschnitt
- 9: Zweiter Erstreckungsabschnitt
- 10: Rillenwand
- 11: Feineinschnitt
- 12: Feineinschnitt
- 13: Feineinschnitt
- 14: Feineinschnitt
- 15: Feineinschnitt

## Patentansprüche

1. Laufstreifenprofil eines Fahrzeugluftreifens mit wenigstens einer Profilblockreihe (1), welche aus in Umfangsrichtung U des Reifens hintereinander angeordneten und durch schräg oder quer verlaufende Rillen (5) voneinander beabstandeten Profilblockelementen (4) ausgebildet und in axialer Richtung A durch Umfangsrillen (2,3) begrenzt ist, wobei die Profilblockelemente (4) in radialer Richtung R des Reifens nach außen hin durch eine die Bodenkontaktfläche bildende radial äußere Oberfläche (6) und in axialer Richtung A zur jeweils angrenzenden Umfangsrille (2) durch eine eine Rillenwand (10) der Umfangsrillen (2) bildende Profilblockelementflanke begrenzt sind, wobei in der radial äußeren Oberfläche (6) von Profilblockelementen (4) der Profilblockreihe (1) jeweils eine Gruppe (7) von mehreren in Umfangsrichtung U hintereinander angeordneten parallelen Feineinschnitte (11,12,13,14,15) ausgebildet sind, die sich ausgehend von der einen Umfangsrillen (2) über eine in der radial äußeren Oberfläche (6) gemessene Länge L und mit einer Tiefe t₁ erstrecken und dort im Abstand zur anderen Umfangsrillen (2) enden,
**dadurch gekennzeichnet,**
**dass** diese von im Profilblockelement (4) in Umfangsrichtung U jeweils hintereinander angeordneten Feineinschnitte (11,12,13,14,15) der Länge L mit L≥6mm in der radial äußeren Oberfläche aus einem ersten (8) und aus einem zweiten (9) Erstreckungsabschnitt bestehen, wobei sie in dem an die Rillenwand (10) der Umfangsrille (2) anschließenden ersten Erstreckungsabschnitt (8) der Länge b mit b≤2mm längs der Rillenwand (10) jeweils bis in eine Tiefe t₂ erstreckt und in dem in der radial äußeren Oberfläche (6) an den ersten Erstreckungsabschnitt (8) anschließenden zweiten Erstreckungsabschnitt (9) mit einer Tiefe t₁ mit (4 t₁) ≤ t₂ ausgebildet ist, und
**dass** diese in eine Drehrichtung D des Reifens in einem Profilblockelement (4) jeweils hintereinander angeordneten Feineinschnitte (11,12,13,14,15) der Gruppe (7) von einem Feineinschnitt in dieser Drehrichtung D jeweils zum nächsten Feineinschnitt hin sowohl mit einer zunehmenden Tiefe t₁ als auch mit einer zunehmenden Tiefe t₂ ausgebildet sind.

2. Laufstreifenprofil gemäß den Merkmalen von Anspruch 1,
wobei diese Feineinschnitte (11,12,13,14,15) des Profilblockelementes (4) mit einer von einem Feineinschnitt des Profilblockelements (4) zum in dieser Drehrichtung D nächsten Feineinschnitt des Profilblockelements (4) hin jeweils zunehmender Länge L ausgebildet sind.

3. Laufstreifenprofil gemäß den Merkmalen von Anspruch 1 oder 2,
wobei die Profilblockelemente (4) in der radial äußeren Oberfläche (6) mit einer in axialer Richtung A gemessenen Breite B ausgebildet sind, und
wobei die Länge L von allen dieser im Profilblockelement (4) in Drehrichtung D hintereinander ausgebildeten Feineinschnitte (11,12,13,14,15) jeweils mit L< B ausgebildet ist.

4. Laufstreifenprofil gemäß den Merkmalen von einem oder mehreren der vorangegangenen Ansprüche,
wobei diese in einem Profilblockelement (4) in Drehrichtung D hintereinander angeordneten Feineinschnitte (11,12,13,14,15) in der radial äußeren Oberfläche (6) jeweils mit gleichem Abstand a mit 1mm ≤ a ≤3mm zu dem im Profilblockelement (4) in Umfangsrichtung U benachbarten Feineinschnitt angeordnet sind.

5. Laufstreifenprofil gemäß den Merkmalen von einem oder mehreren der vorangegangenen Ansprüche,
wobei die Feineinschnitte (11,12,13,14,15) des Profilblockelements (4) in der radial äußeren Oberfläche (6) parallel zu den beiden das Profilblockelement (4) in Umfangsrichtung U begrenzenden Rillen (5) ausgerichtet sind,
wobei der in der radial äußeren Oberfläche (6) gemessene Abstand c zwischen der dem Profilblockelement (4) in Drehrichtung D vorgeordneten Rille (5) einerseits und dem dieser Rille (5) nächstgelegenen Feineinschnitt (15) des Profilblockelements (4) andererseits und der in der radial äußeren Oberfläche (6) gemessene Abstand d zwischen der dem Profilblockelement (4) in Drehrichtung D nachgeordneten Rille (5) einerseits und dem dieser Rille (5) nächstgelegenen Feineinschnitt (11) des Profilblockelements (4) andererseits mit d> c - insbesondere mit d≥(2c) - ausgebildet sind.

6. Laufstreifenprofil gemäß den Merkmalen von Anspruch 5,
wobei der Abstand c mit 1mm ≤ c ≤ 3mm ausgebildet ist.

7. Laufstreifenprofil gemäß den Merkmalen von einem oder mehreren der vorangegangenen Ansprüche,
wobei diese in einem Profilblockelement (4) ausgebildete Gruppe (7) von in Drehrichtung D hintereinander angeordneten Feineinschnitten (11,12,13,14,15)aus Z Feineinschnitte mit 3 ≤Z≤ 6 besteht.

## Claims

1. Tread profile of a pneumatic tyre of a vehicle, with at least one profile block row (1) which is formed from profile block elements (4), which are arranged one behind another in the circumferential direction U of the tyre and are spaced apart from one another by obliquely or transversely running grooves (5), and is bounded in the axial direction A by circumferential grooves (2, 3), wherein the profile block elements (4) are outwardly bounded in the radial direction R of the tyre by a radially outer surface (6) forming the ground contact surface, and in the axial direction A with respect to the respectively adjacent circumferential groove (2) by a profile block element flank forming a groove wall (10) of the circumferential groove (2), wherein a group (7) of a plurality of parallel fine incisions (11, 12, 13, 14, 15) arranged one behind another in the circumferential direction U are in each case formed in the radially outer surface (6) of profile block elements (4) of the profile block row (1), said fine incisions extending from the one circumferential groove (2) over a length L, as measured in the radially outer surface (6), and with a depth t₁ and ending there at a distance from the other circumferential groove (2), **characterized in that** said fine incisions (11, 12, 13, 14, 15), which are in each case arranged of one behind another in the circumferential direction U in the profile block element (4) and are of the length L, where L ≥ 6 mm, in the radially outer surface consist of a first section of extent (8) and of a second section of extent (9), wherein said fine incisions in each case extends in the first section of extent (8), which adjoins the groove wall (10) of the circumferential groove (2) and is of the length b, where b ≤ 2 mm, along the groove wall (10) to a depth t₂ and is formed in the second section of extent (9), which adjoins the first section of extent (8) in the radially outer surface (6), with a depth t₁, where (4t₁) ≤ t₂, and **in that** said fine incisions (11, 12, 13, 14, 15) of the group (7), said fine incisions each being arranged one behind another in a profile block element (4) in a direction of rotation D of the tyre, are formed from one fine incision in said direction of rotation D to the next fine incision in each case both with an increasing depth t₁ and with an increasing depth t₂.

2. Tread profile according to the features of Claim 1, wherein said fine incisions (11, 12, 13, 14, 15) of the profile block element (4) are formed with a respectively increasing length L from one fine incision of the profile block element (4) to the next fine incision of the profile block element (4) in said direction of rotation D.

3. Tread profile according to the features of Claim 1 or 2, wherein the profile block elements (4) in the radially outer surface (6) are formed with a width B, as measured in the axial direction A, and wherein the length L of all of said fine incisions (11, 12, 13, 14, 15), which are formed one behind another in the profile block element (4) in the direction of rotation D, is in each case formed where L < B.

4. Tread profile according to the features of one or more of the preceding claims, wherein said fine incisions (11, 12, 13, 14, 15), which are arranged one behind another in a profile block element (4) in the direction of rotation D, are in each case arranged in the radially outer surface (6) at the same distance a, where 1 mm ≤ a ≤ 3 mm, from the fine incision which is adjacent in the circumferential direction U in the profile block element (4).

5. Tread profile according to the features of one or more of the preceding claims, wherein the fine incisions (11, 12, 13, 14, 15) of the profile block element (4) are oriented in the radially outer surface (6) parallel to the two grooves (5) bounding the profile block element (4) in the circumferential direction U, wherein the distance c, as measured in the radially outer surface (6), between the groove (5) arranged upstream of the profile block element (4) in the direction of rotation D, on the one hand, and the fine incision (15), which is closest to said groove (5), of the profile block element (4), on the other hand, and the distance d, as measured in the radially outer surface (6), between the groove (5) arranged downstream of the profile block element (4) in the direction of rotation D, on the one hand, and the fine incision (11), which is closest to said groove (5), of the profile block element (4), on the other hand, are formed where d > c, in particular where d ≥ (2c).

6. Tread profile according to the features of Claim 5, wherein the distance c is formed where 1 mm ≤ c ≤ 3 mm.

7. Tread profile according to the features of one or more of the preceding claims, wherein said group (7) of fine incisions (11, 12, 13, 14, 15) arranged one behind another in the direction of rotation D, which group is formed in a profile block element (4), consists of Z fine incisions where 3 ≤ Z < 6.

## Revendications

1. Profil de bande de roulement d'un pneu de véhicule avec au moins une série de blocs de profils (1), qui est formée d'éléments de blocs de profils (4) disposés l'un derrière l'autre dans la direction périphérique U du pneu et espacés l'un de l'autre par des sillons (5) s'étendant en oblique ou transversalement et est limitée en direction axiale A par des gorges périphériques (2, 3), dans lequel les éléments de blocs de profils (4) sont limités en direction radiale R du pneu vers l'extérieur par une surface radialement extérieure (6) formant la face de contact avec le sol et en direction axiale A vers la gorge périphérique respective (2) par un flanc d'élément de bloc de profil formant une paroi de gorge (10) de la gorge périphérique (2), dans lequel un groupe (7) de plusieurs fines entailles parallèles (11, 12, 13, 14, 15) disposées l'une derrière l'autre dans la direction périphérique U sont respectivement formées dans la surface radialement extérieure (6) d'éléments de blocs de profils (4) de la série de blocs de profils (1), lesquelles s'étendent à partir d'une première gorge périphérique (2) sur une longueur L mesurée dans la surface radialement extérieure (6) et avec une profondeur t₁ et se terminent là-bas à distance de l'autre gorge périphérique (2),
**caractérisé en ce que**
ces fines entailles (11, 12, 13, 14, 15) de longueur L, avec L ≥ 6 mm, dans la surface radialement extérieure disposées chaque fois de l'une derrière l'autre en direction périphérique U dans l'élément de blocs de profils (4) se composent d'une première (8) et d'une deuxième (9) partie d'extension, dans lequel elles s'étend dans la première partie d'extension (8) de longueur b, avec b ≤ 2 mm, se raccordant à la paroi de gorge (10) de la gorge périphérique (2) le long de la paroi de gorge (10) respectivement jusqu'à une profondeur t₂ et est formée dans la deuxième partie d'extension (9) se raccordant dans la surface radialement extérieure (6) à la première partie d'extension (8) avec une profondeur t₁, avec (4 t₁) ≤ t₂, et
ces fines entailles (11, 12, 13, 14, 15) du groupe (7) disposées respectivement l'une derrière l'autre dans une direction de rotation D du pneu dans un élément de blocs de profils (4) sont réalisées depuis une fine entaille à la fine entaille suivante dans cette direction de rotation D aussi bien avec une profondeur t₁ croissante qu'avec une profondeur t₂ croissante.

2. Profil de bande de roulement selon les caractéristiques de la revendication 1, dans lequel ces fines entailles (11, 12, 13, 14, 15) de l'élément de blocs de profils (4) sont formées avec une longueur L respectivement croissante depuis une fine entaille de l'élément de blocs de profils (4) à la fine entaille de l'élément de blocs de profils (4) qui suit dans la direction de rotation D.

3. Profil de bande de roulement selon les caractéristiques de la revendication 1 ou 2, dans lequel les éléments de blocs de profils (4) sont formés dans la surface radialement extérieure (6) avec une largeur B mesurée dans la direction axiale A , et dans lequel la longueur L de toutes ces fines entailles (11, 12, 13, 14, 15) formées l'une derrière l'autre dans la direction de rotation D dans l'élément de blocs de profils (4) est formée chaque fois avec L < B.

4. Profil de bande de roulement selon les caractéristiques d'une ou de plusieurs des revendications précédentes, dans lequel ces fines entailles (11, 12, 13, 14, 15) disposées l'une derrière l'autre dans la direction de rotation D dans un élément de blocs de profils (4) sont disposées dans la surface radialement extérieure (6) respectivement avec la même distance a, avec 1 mm ≤ a ≤ 3 mm, de la fine entaille voisine dans la direction périphérique U dans l'élément de blocs de profils (4).

5. Profil de bande de roulement selon les caractéristiques d'une ou de plusieurs des revendications précédentes, dans lequel les fines entailles (11, 12, 13, 14, 15) de l'élément de blocs de profils (4) sont orientées dans la surface radialement extérieure (6) parallèlement aux deux sillons (5) limitant l'élément de blocs de profils (4) dans la direction périphérique U,
dans lequel la distance c mesurée dans la surface radialement extérieure (6) entre le sillon (5) précédant l'élément de blocs de profils (4) dans la direction de rotation D d'une part et la fine entaille (15) de l'élément de blocs de profils (4) la plus proche de ce sillon (5) d'autre part et la distance d mesurée dans la surface radialement extérieure (6) entre le sillon (5) suivant l'élément de blocs de profils (4) dans la direction de rotation D d'une part et la fine entaille (11) de l'élément de blocs de profils (4) la plus proche de ce sillon (5) d'autre part sont formées avec d > c - en particulier d ≥ (2c).

6. Profil de bande de roulement selon les caractéristiques de la revendication 5, dans lequel la distance c est réalisée avec 1 mm ≤ c ≤ 3 mm.

7. Profil de bande de roulement selon les caractéristiques d'une ou de plusieurs des revendications précédentes, dans lequel ce groupe (7) de fines entailles (11, 12, 13, 14, 15) disposées l'une derrière l'autre dans la direction de rotation D formé dans un élément de blocs de profils (4) se compose de Z fines entailles avec 3 ≤ Z ≤ 6.
